# EUROPEAN PATENT SPECIFICATION

(11) **EP 2 650 447 B1**
(45) Date of publication and mention of the grant of the patent: **23.09.2015**
(21) Application number: 13163358.8
(22) Date of filing: 11.04.2013
(51) Int. Cl.: E02D 27/42

(54) **Pinning of a Multi-walled Structure**
Befestigen einer mehrwandigen Struktur
Brochage d'une structure à parois multiples

(30) Priority: 12.04.2012 GB 201206460
(43) Date of publication of application: 16.10.2013
(73) Proprietor: Claxton Engineering Services Limited, Great Yarmouth NR30 1TE (GB)
(72) Inventor: Patterson, Rowan Warwick, Beccles, NR34 0EA (GB); Marcantonio, Matthew Vincent, Norwich, NR2 2BL (GB)
(74) Representative: Dummett Copp LLP

(56) References cited:
- GB-A- 1 422 667
- JP-A- 2005 009 131

## Description

### BACKGROUND

### a. Field of the Invention

This invention relates to a securing pin assembly and to a method for stabilising a multi-walled structure and, in particular, to a method for stabilising a grouted connection between a wind turbine tower and a supporting structure such as a mono-pile.

### b. Related Art

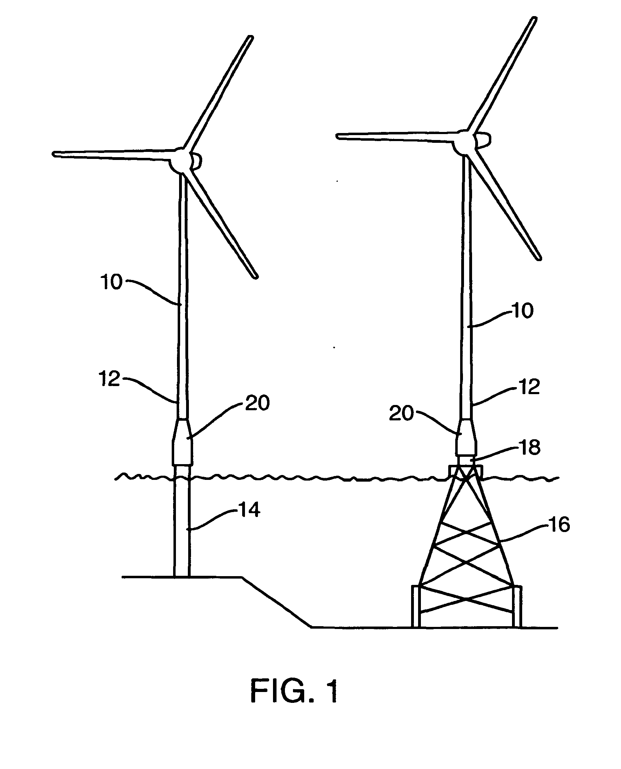

Typically current offshore wind turbine towers have a main tower with a tubular body, at an upper end of which the rotor blades are connect, such as disclosed in GB 1422667A. The lower end of the tubular body includes a flange for connection to a supporting structure. The supporting structure may be a single tubular pile driven into relatively shallow water or alternatively, when the water is deeper, the supporting structure may include a framework structure formed from a lattice of structural members supported by a number of seabed piles and terminated at an upper end by a tubular member, as illustrated in Figure 1. A tubular transition piece is typically located between the wind turbine tower and the supporting structure, and generally the transition piece is welded to the lower end of the tubular body of the wind turbine tower for subsequent connection to the tubular pile or tubular member of the supporting structure.

Wind velocities increase at higher altitudes due to decreased surface aerodynamic drag by land or water surfaces, and so there is the need to maximise the height of the wind turbine towers and therefore the turbine blades. The tallest wind turbines have a main tower more than 100 m in height.

When the main tower is to be connected to the supporting structure, the tubular transition piece, which has an inner diameter greater than the outer diameter of the tubular pile or member, is inserted over the tubular pile or member.

Typically, the drilled or driven pile or supporting structure is installed with its axis aligned to within 0.5° of vertical. At a height of 100 m, a misalignment of 0.5° of the main tower with respect to vertical will result in a tilt of about 90 cm from vertical at the top of the main tower. Such a lean will add to the moment loads applied to the foundations of the wind turbine. To compensate for this amount of misalignment, it then becomes necessary to increase the strength of the main tower and supporting structure and foundations. Ideally the tower needs to be as close to vertical a possible to ensure even loading on the tower and turbine.

Therefore, in order to permit the axial alignment between the tubular body of the main tower and the tubular supporting structure to be adjusted, it is known to provide a clearance gap between the outer tubular transition piece and the inner tubular pile or member. This gap allows a certain degree of movement between the tubular body of the main tower and the tubular pile prior to these being fixed in place with respect to each other, and also accommodates the fact that such tubular members, which may be around 6 m in diameter, may be slightly oval with a deviation from circularity of up to about ± 1.5% and with a tolerance on nominal diameter of about ± 1.0%.

During installation, the transition piece, which may weigh 200 tonnes, is suspended by a crane, and then the orientation of the transition piece is adjusted until this is sufficiently close to vertical. The orientation and spacing of the transition piece from the supporting structure is set by internal pads and hydraulic levelling jacks inside the gap at the top of the pile and then fixed in place with a high quality epoxy grout inserted between the outer wall of the pile and the inner wall of the tubular transition piece. The grout may take about one week to cure.

A number of problems have been noted with this alignment and setting procedure.

It takes time for the grout to set, during which the main transition piece has to be kept carefully in place by the hydraulic levelling jacks, all of which is very expensive. Furthermore the grout interface has shown a tendency over time to break up resulting in an insecure foundation and expensive remedial work.

A number of solutions have been proposed to provide alternative connection means to avoid the need for grout between the supporting structure and a transition piece. One method for vertically aligning a wind turbine tower is shown in US 2011/0138730 which describes a tower segment having angled ends that may be installed between the supporting structure and the wind turbine tower. Rotation of the tower segment permits compensation for any misalignment of the supporting structure from vertical.

However, the use of these alternative arrangements is more expensive than traditional construction means. Furthermore, there is a need to overcome the problem of replacing existing grout in wind turbine structures or to find a means for stabilising and supporting such structures.

It is therefore an object of the present invention to provide a method and apparatus for stabilising a multi-walled structure such as that between a wind turbine tower and a supporting structure which addresses at least some of these issues.

### SUMMARY OF THE INVENTION

According to the invention, there is provided a method for stabilising a multi-walled structure, the structure comprising a first wall and a second wall and a filler layer sandwiched between the first and second walls, the first wall providing a first side of the structure and the second wall providing a second side of the structure, the method comprising:
- providing at least one hole extending through the first wall and the second wall and said filler layer between said walls from the first side of the structure to the second side of the structure;
- inserting a tube through said hole, the tube having a central bore, a first end of the tube extending from the first side of the structure and a second end of the tube extending from the second side of the structure;
- inserting a peg through the bore of the tube, the peg having a head portion at a first end of the peg, at least a part of the head portion having an outer diameter greater than the diameter of the bore of the tube, and the head portion being located on the first side of the structure;
- pulling the peg through the tube towards the second side of the structure so that the head portion causes the first end of the tube to deform radially outwards so that the first end of the tube expands beyond the diameter of the bore of the tube to bear against the first side of the structure;
- securing a first securing means to a second end of the peg on the second side of the structure such that said first securing means bears against the second end of the tube in order to secure said expansion of the first end of the tube; and
- securing a second securing means to the second end of the tube such that the second securing means bears against the second side of the structure;
wherein, the deformed first end of the tube portion on the first side of the structure and the second securing means on the second side of the structure clamp together the first and second walls of the structure thereby applying a compressive force to the filler layer between said walls.

Also according to the invention, there is provided securing pin assembly for stabilising a multi-walled structure having a first wall and a second wall on respective first and second sides of said structure, and a filler layer sandwiched between the first and second walls, the securing pin assembly comprising:
- a tube, the tube having a central bore and the tube extending axially between a first end of the tube and a second end of the tube;
- a peg, the peg extending axially through the central bore of the tube between a first end of the peg and a second end of the peg and having a head portion at said first end of the peg that bears against an inner diameter of said bore at the first end of the tube, at least a part of the head portion having an outer diameter greater than the diameter of the bore of the tube, such that when the head portion of the peg and the first end of the tube are, in use, pressed axially together, the head portion is configured to cause the first end of the tube to deform radially outwards so that the first end of the tube expands beyond the diameter of the bore of the tube on the first side of the structure;

- a first securing means that is secured to a second end of the peg such that said first securing means bears against the second end of the tube in order to secure said expansion of the first end of the tube;
- a second securing means that is secured to the second end of the tube such that the second securing means, in use, bears against the second side of the structure;
- wherein, the deformed first end of the tube and the second securing means are configured, in use, to apply a compressive force to, respectively, the first side of the structure and the second side of the structure and thereby clamp together the first and second walls of the structure to compress the filler layer between said walls.

In a preferred embodiment of the invention, the filler layer is a grout layer.

The first wall may be part of an inner tube and the second wall may be part of an outer tube. The first side is then a radially inner surface of the inner tube and the second side is a radially outer surface of the outer tube.

The head portion of the peg is preferably formed from a tapered nut that is threaded onto a similarly threaded first end of the peg. One end of this nut may then have an outer diameter smaller than the diameter of the bore of the tube and an opposing end of the nut has a diameter greater than the diameter of the bore of the tube. The nut is then arranged such that when the peg is pulled through the tube, the end of the nut having the smaller diameter contacts the first end of the tube first.

In a preferred embodiment of the invention, the first securing means comprises a nut threaded onto a threaded second end of the peg.

Also in a preferred embodiment of the invention, the second securing means comprises a nut threaded onto a threaded second end of the tube.

The method step of providing the, or each, hole may comprise forming the, or each, hole with a constant diameter extending through the first wall, the second wall and the filler layer.

Alternatively, the method step of providing the, or each, hole may comprise forming the, or each, hole with a first diameter extending through the first wall and forming the, or each, hole with a second diameter, different to the first diameter, extending through the second wall and filler layer. The tube then has a first portion having an outer diameter substantially equal to the first diameter of the, or each, hole and a second portion having an outer diameter substantially equal to the second diameter of the, or each, hole such that there is a close fit of the, or each, tube within the corresponding hole.

In a preferred embodiment of the invention, the first diameter is smaller than the second diameter. The tube may then have a step in diameter corresponding with difference between the first diameter and the second diameter of the hole. This step may then bear against a side of the first wall opposite the first side when the tube is inserted into the hole so that as the first end of the tube is deformed radially outwards, the first end of the tube expands beyond the first diameter to bear against the first side of the structure. In this way, the step in the diameter of the tube is secured against the side of the first wall opposite the first side of the first wall.

The method step of pulling the peg through the tube may comprise pulling the peg using a hydraulic tension tool.

The method according to the invention may further comprise cutting longitudinal slits in the first end of the tube to form tab portions between the slits, the tab portions being deformable by the head portion of the peg as the peg is pulled through the tube towards the second side of the structure.

In a preferred embodiment of the invention, the first wall is a part of a supporting pile and the second wall is a part of a wind turbine tower.

The first and second walls may therefore be concentric walls of a tubular multi-walled structure. The method according to the invention may therefore comprise providing a plurality of holes spaced around a circumference of the tubular structure.

The multi-walled structure may be a substantially vertical structure and the filler layer may be a grout layer that is sandwiched between the first wall and the second wall such that the grout layer is bounded by an upper edge of grout and a lower edge of grout. The method may then comprise providing a plurality of holes proximate this upper grout edge and a plurality of holes proximate the lower grout edge.

### BRIEF DESCRIPTION OF THE DRAWINGS

The invention will now be further described, by way of example only, with reference to the accompanying drawings, in which:
Figure 1 illustrates two wind turbines, a first turbine mounted on a single mono-pile foundation and a second turbine mounted on a framework supporting structure;
Figure 2 is a perspective view of a transition piece installed between a supporting structure and a tubular wind turbine tower, including a plurality of securing pin assemblies for stabilising a grout interface according to the present invention;
Figure 3 is a cross sectional view of one of the securing pin assemblies of Figure 2 showing the arrangement of the securing pin assembly during and after installation;
Figure 4 is an end view of the securing pin assembly from the outside of the transition piece;
Figure 5 is a perspective view of one embodiment of an end of a lock pin forming part of the securing pin assembly, the lock pin having a plurality of deformable tabs; and
Figure 6 is a perspective view of the end of the lock pin of Figure 5 showing the tabs partially deformed during installation of the securing pin assembly.

### DETAILED DESCRIPTION

Figure 1 shows a wind turbine tower 10 connected at a lower end 12 to foundations or a supporting structure, which may be for example a single supporting pile 14 or a larger framework 16 including an upper supporting member 18. A transition piece or connector assembly 20 is used to connect the lower end 12 of the tower 10 to the supporting pile or member 14, 18. References throughout the remainder of the description to a supporting pile 14 will be understood to include both a supporting member 18 forming part of a larger framework 16 and a single supporting mono-pile 14.

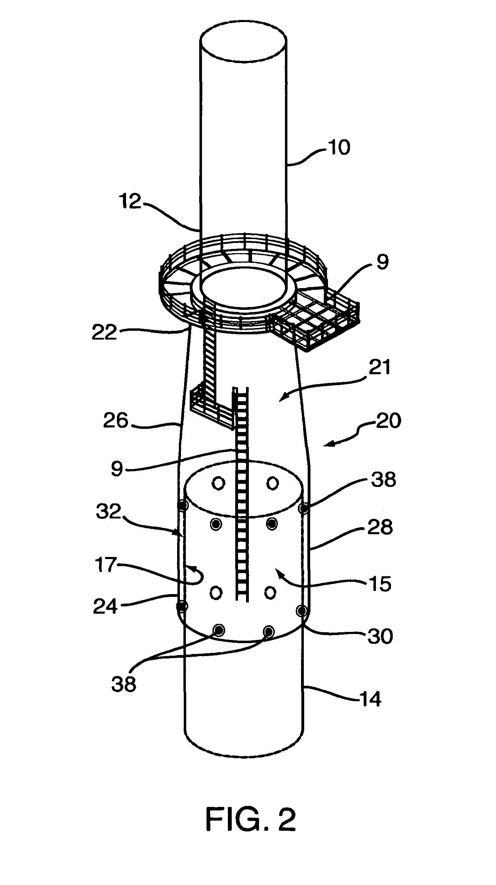

Figure 2 shows a more detailed view of the transition piece 20. Typically the supporting pile 14 has a larger diameter than the wind turbine tower 10. As such, a first, upper end region 22 of the transition piece 20, which is typically welded to the lower end 12 of the tower 10, has a narrower diameter than a second, lower end 24 of the transition piece 20.

The transition piece 20 is a hollow tubular structure and a lower region 28 of the transition piece 20 is designed to fit over an upper end 30 of the supporting pile 14 and has an internal diameter that is larger than the external diameter of the supporting pile 14. The transition piece 20 further includes a tapered central region 26 that extends between the lower region 28 and the upper end region 22 of the transition piece 20.

The transition piece 20 and the supporting pile 14 each have a hollow central bore 21, 15. Access walkways 9 are provided that extend from around the upper end region 22 of the transition piece 20 down through the bore 21 of the transition piece 20 and into the bore 15 of the supporting pile 14. These walkways 9 permit access to the interior surface 17 of the tubular supporting pile 14 during construction of the wind turbine.

As explained above, an axis of the supporting pile 14 may be misaligned from vertical by as much as 0.5°, due to irregularities in the sea bed for example. It is, however, undesirable for this degree of misalignment to persist for the full height of the wind turbine tower 10. To permit a degree of angular movement between the wind turbine tower 10 and the supporting pile 14 during installation of the tower 10, a clearance gap 32 is provided between the lower region 28 of the transition piece 20 and the supporting pile 14.

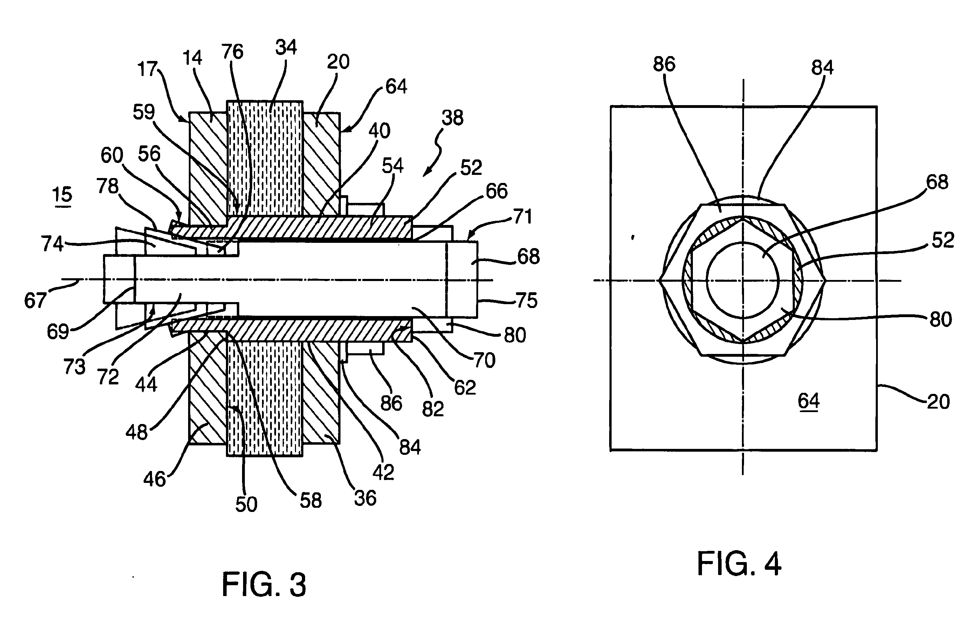

Once the wind turbine tower 10 is correctly positioned, as close to vertical as possible, a grout 34 is used to fill the clearance gap 32 between a wall 36 of the transition piece 20 and a wall 46 of the supporting pile 14, as shown in Figure 3. Preferably the grout is an epoxy grout.

All the loads that are imparted to the wind turbine tower 10 during use are transmitted through the transition piece 20, to the supporting pile 14 and then into the sea bed. These loads cause the wall 36 of the tubular transition piece 20 to flex, and this in turn causes some regions of the grout 34 to be in compression and other regions of the grout 34 to be in tension. These tensile forces, in particular, can cause the grout 34 to break up over time leading to failure of the structure in these regions.

This is a cause of great concern in the industry as the turbine tower 10 and transition piece 20 can slip down the supporting pile 14 and also move out of vertical, potentially leading to shut down or even loss of the wind turbine tower 10.

Figures 3 and 4 show a securing pin assembly 38 according to a preferred embodiment of the present invention that is located through the walls 36, 46 of the transition piece 20 and supporting pile 14 and the grout layer 34 between them. The securing pin assembly 38 stabilises the structure and, in particular, lessens or prevents tensile loads being imparted to the grout 34 in the region of the pin assembly 38.

The components of the securing pin assembly 38 will now be described with reference to a preferred method of installation of the pin assembly.

A hole 40 is first drilled through the walls 36, 46 of the transition piece 20 and supporting pile 14 and the grout layer 34 between the walls. The hole 40 may have a constant diameter, but in the preferred embodiment is a stepped hole. The hole has a stepped cylindrical inner shape with a first inner portion 44 with a first diameter and second outer portion 42 with a second diameter. The second outer portion 42 of the hole 40 extends through the wall 36 of the transition piece 20 and the grout layer 34, and the first inner portion 44 of the hole 40 extends through the wall 46 of the pile 14. The first diameter is smaller than the second diameter. As such, a step 48 is formed in the hole 40 at an outer surface 50 of the pile 14. In this example, this step is an annular shoulder 48.

A tubular lock pin 52 is inserted into the hole 40 from the outside of the transition piece 20. The lock pin may be a tube having a constant outer diameter, but in the preferred embodiment of the invention is a tube having a stepped outer diameter that conforms to the stepped inner diameter of the hole 40. The lock pin 52 is a tube having a substantially cylindrical form and having a first end 60 and an opposite second end 62. In this example, the tube has integrally formed first and second cylindrical sections 56, 54. The first cylindrical section 56 is towards the first end 60 of the tube has an outer diameter equal to the diameter of the first inner portion 44 of the hole 40, and the second cylindrical section 54 is towards the second end 62 of the tube and has an outer diameter equal to the diameter of the second outer portion 42 of the hole 40. As such, the lock pin 52 has a step 58 in its outer surface 59 corresponding to the shoulder 48 of the hole 40. In this example, this step is an annular shoulder 58. Typically, when the lock pin 52 is inserted into the hole 40, its outer surface 59 is coated in a suitable sealant (not shown) to protect against corrosion.

The length of the tubular lock pin 52 is such that when the lock pin is fully inserted into the hole 40 and the shoulder 58 is seated on the outer surface 50 of the pile 14, a first end 60 of the lock pin 52 protrudes into the inner bore 15 of the pile 14 and a second end 62 of the lock pin 52 extends beyond an outer surface 64 of the transition piece 20. The outer surface 59 of the second end 62 of the lock pin 52 is threaded for receiving a clamping nut 86, as described below.

The tubular lock pin 52 has a central bore 66 for receiving a peg 68. The central bore 66 initially has a constant diameter and extends through the full length of the lock pin 52.

The peg 68 is generally cylindrical and has a first end 69 and an opposite second end 75. The first end 69 extends beyond the inner surface 17 of the supporting pile 14 and the second end 75 extends beyond the outer surface 64 of the transition piece 20. The peg has towards its first end 69 a first, nose portion 72 and towards its second end 75 a second securing portion 70. The second securing portion 70 has a diameter slightly smaller than the diameter of the bore 66 of the lock pin 52 and the first, nose portion 72 has a smaller diameter than that of the second securing portion 70. Both the first and second peg portions share a common axis 67, which also defines the axis of the securing pin assembly 38. The length of the peg 68 is such that the first end 69 of the peg protrudes from the first end 60 of the lock pin 52 and the second end 75 of the peg protrudes from the second end 62 of the lock pin 52 when the peg is fully inserted in the lock pin 52. At least an end portion of an outer surface 71 of the second securing portion 70 of the peg 68 is threaded to receive a first securing means, which in this example is a securing nut 80, as described further below.

An outer surface 73 of the nose portion 72 is threaded for receiving a tapered nut 74, which has a frusto-conical shape, to form a head portion of the peg 68. As will be explained below, the peg 68 and nut 74 act together to outwardly deform the shape of the first inner end 60 of tubular lock pin 52, and therefore will be referred to, respectively, as a swage peg 68 and a swage nut 74.

The swage nut 74 is secured to the nose portion 72 of the swage peg 68 so that a narrower end 76 of the swage nut 74 is closest to the second securing portion 70 of the swage peg 68 and a wider end 78 of the swage nut 74 is closest to the first end 69 of the swage peg at the nose portion 72. The narrower end 76 of the swage nut 74 has an outer diameter less than the diameter of the bore 66 of the lock pin 52, while the wider end 78 has an outer diameter greater than the diameter of the bore.

Once the swage nut 74 is secured to the nose portion 72 of the swage peg 68, the peg is pulled longitudinally through the bore 66 in an outwards direction so that the swage nut 74 is forced into the bore at the first end 60 of the tubular lock pin 52.

The tapered shape of the swage nut 74 is such that, as the swage peg 68 is drawn through the bore 66, the increasing outer diameter of the part of the swage nut 74 in contact with the first end 60 of the tubular lock pin 52 causes the first end of the lock pin 52 to deform outwards against the interior surface 17 of the pile 14. This is illustrated in Figure 3, in which the dashed lines indicate an initial position of the swage peg 68 and swage nut 74, and the initial undeformed shape of the first end 60 of the tubular lock pin 52, before the swage peg is drawn through the lock pin 52, and the solid lines indicate a final position of the swage peg and nut 74, and the deformed shape of the first end 60 of the lock pin 52, after pulling of the swage peg 68.

Typically the swage peg 68 will be pulled by a hydraulic tension tool (not shown) that attaches to and bears against the second end 62 of the tubular lock pin 52; however, the swage peg 68 may be pulled by any suitable means to cause the swage nut 74 to deform the first end 60 of the lock pin 52.

Once the first end 60 of tubular the lock pin 52 has deformed to the required extent, the securing nut 80 is placed over the threaded end 75 of the second securing portion 70 of the swage peg 68. The securing nut 80 is screwed tightly onto the swage peg 68 so that a face 82 of the securing nut 80 bears against the second end 62 of the lock pin 52. This securing nut 80, therefore, maintains a tensile force on the swage peg 68. The securing nut therefore provides a first securing means that bears against the second end 62 of the tubular lock pin 52 in order to secure the expansion of the first end 60 of the lock pin.

A thrust disc or washer 84 is then placed over the second end 62 of the tubular lock pin 52 and seated around the lock pin 52 against the outer surface 64 of the transition piece 20. The clamping nut 86 is then secured around the second end 62 of the lock pin 52. The clamping nut 86 engages with the threaded outer surface 59 of the lock pin and is tightened so that the washer 84 and clamping nut 86 bear against the transition piece 20. The washer 84 and clamping nut 86 therefore provide a second securing means that bears against the second outer side 64 of the structure.

The arrangement of the deformed first end 60 of the tubular lock pin 52 and the clamping nut 86 effectively clamps together the transition piece 20 and the wall 46 of the pile 14, thereby imparting a compressive force to the grout layer 34 between the transition piece 20 and the pile 14.

Preferably, a plurality of securing pin assemblies 38 is arranged around the circumference of the wind turbine structure to mechanically secure the transition piece 20 and supporting pile 14 and thereby stabilise the grout layer 34. Preferably, there is a plurality of securing pin assemblies 38 spaced around the circumference of the structure proximate an upper edge of the grout layer 34 and another plurality of securing pin assemblies spaced around the circumference of the structure proximate a lower edge of the grout layer. In a preferred embodiment, at least six securing pin assemblies 38 are spaced equidistantly around the structure proximate an upper edge of the grout layer 34 and an additional at least six securing pin assemblies are spaced equidistantly around the structure proximate a lower edge of the grout layer 34, as shown in Figure 2. This arrangement of securing pin assemblies creates a structural connection that is sufficient to prevent further movement of the transition piece 20 relative to the pile 14.

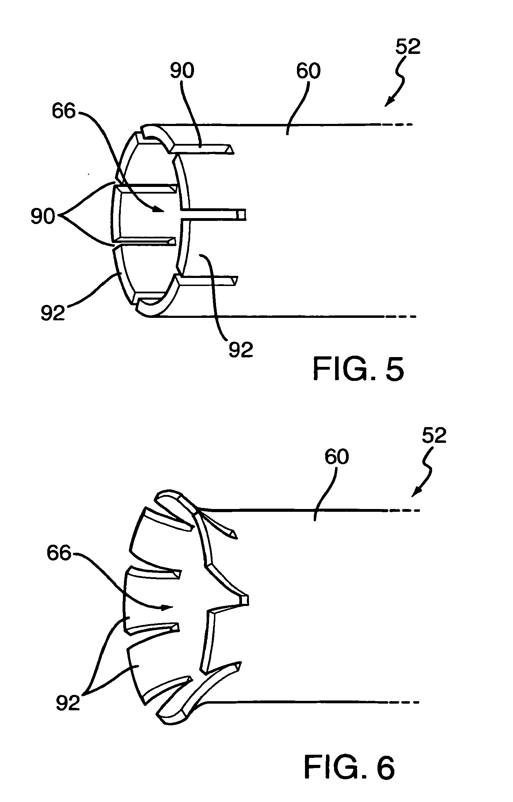

The first end 60 of the lock pin is outwardly deformable under the action of the head portion 74 of the swage peg 68. The first end of the lock pin may deform elastically or inelastically or a combination of the two. The first end 60 of the securing pin may initially have a continuous cylindrical shape which is then bowed outwards by the head portion 74 of the peg 68. However, in order to facilitate this deformation, in the preferred embodiment, the first end of the lock pin has a series of parallel longitudinal slits 90 in the first end 60 of the lock pin 52, as shown in Figure 5. The slits 90 are spaced apart around the circumference of the lock pin 52 so that tabs 92 are formed between the slits 90. As the swage nut 74 (see Figure 3) is drawn into the bore 66 at the end 60 of the lock pin 52, the increasing outer diameter of the swage nut causes each of the tabs 92 to splay or bend outwards, as shown in Figure 6. Forming a series of separate tabs 92 in this way makes deformation of the second end 60 of the lock pin 52 easier, thereby requiring less force to be applied to the swage peg.

The first and second walls of the multi-walled structure will normally be made from sheet material, for example steel plate, which may be treated and painted to provide corrosion resistance. The securing pin assembly may be made from a corrosion resistant metal, for example marine grade stainless steel (SAE 316).

From the above, it will be apparent that the stepped outer diameter of the tubular lock pin 52 provides several advantages. First, the step 58 in the outer surface 59 of the lock pin seats against the shoulder 48 of the hole 40, which therefore locates the lock pin in a longitudinal direction prior to securing. Second, the step 58 makes the material of the lock pin 52 thinner and therefore more deformable, at the first end 60 of the lock pin. The material of the second end 62 of the lock pin is relatively thicker and therefore stronger.

The securing pin assemblies 38 of the present invention may be installed during the initial construction of a wind turbine tower 10, or alternatively may be retrofit to existing wind turbine structures to prevent further deterioration of the interface between the transition piece 20 and the supporting pile 14.

Although the foregoing description has described the use of the securing pin assemblies 38 to stabilise the connection between a transition piece 20 and supporting pile 14 in a wind turbine structure, it will be appreciated that the securing pin assemblies 38 may be used to provide a mechanical connection in other multi-walled or multi-lamina structures in which relative movement of the walls or layers may occur. These structures may be composed of concentric tubular walls, parallel flat walls, or walls of any other shape where there is a filler layer sandwiched between the walls.

Furthermore, it will be understood that the securing pin assemblies 38 may be used to stabilise a structure having a different filler layer in place of the grout layer 34 described above, for example a cementitious layer or an adhesive layer.

The securing pin assembly and the method of the present invention, therefore, provide a cost effective, safe and reliable means to mechanically secure and stabilise a multi-walled structure by pinning together of inner and outer walls and in particular provide a retrofit pinning connection between a turbine tower transition piece and a supporting pile having a grout layer between them.

## Claims

1. A method for stabilising a multi-walled structure, the structure comprising a first wall (46) and a second wall (36) and a filler layer (34) sandwiched between the first and second walls, the first wall providing a first side (17) of the structure and the second wall providing a second side (64) of the structure, the method comprising:
- providing at least one hole (40) extending through the first wall (46) and the second wall (36) and said filler layer (34) between said walls from the first side of the structure to the second side of the structure;
- inserting a tube (52) through said hole (40), the tube having a central bore (66), a first end (60) of the tube extending from the first side (17) of the structure and a second end (62) of the tube extending from the second side (64) of the structure;
- inserting a peg (68) through the bore (66) of the tube (52), the peg having a head portion (74) at a first end (69) of the peg, at least a part (78) of the head portion having an outer diameter greater than the diameter of the bore of the tube, and the head portion (74) being located on the first side (17) of the structure;
- pulling the peg (68) through the tube (52) towards the second side (64) of the structure so that the head portion (74) causes the first end (60) of the tube to deform radially outwards so that the first end of the tube expands beyond the diameter of the bore (66) of the tube to bear against the first side of the structure;
- securing a first securing means (80) to a second end (75) of the peg on the second side (64) of the structure such that said first securing means bears against the second end (62) of the tube in order to secure said expansion of the first end (60) of the tube; and
- securing a second securing means (84, 86) to the second end (62) of the tube such that the second securing means bears against the second side (64) of the structure;
wherein, the deformed first end (60) of the tube (52) on the first side (17) of the structure and the second securing means (84, 86) on the second side (64) of the structure clamp together the first and second walls (46, 36) of the structure thereby applying a compressive force to the filler layer (34) between said walls.

2. A method as claimed in Claim 1, in which the method includes securing a tapered nut (74) onto the first end (60) of the peg (68) to form the head portion of the peg.

3. A method as claimed in Claim 2, in which one end (76) of the nut (74) has an outer diameter smaller than the diameter of the bore (66) of the tube and an opposing end (78) of the nut has a diameter greater than the diameter of the bore of the tube, and wherein the nut is arranged such that when the peg (68) is pulled through the tube (52), the end of the nut having the smaller diameter contacts the first end (60) of the tube first.

4. A method as claimed in any preceding claim, in which the first securing means comprises a nut (80) and the method comprises the step of threading said nut onto a threaded second end (75) of the peg (68).

5. A method as claimed in any preceding claim, in which the second securing means comprises a nut (86) and the method comprises the step of threading said nut onto a threaded second end (75) of the tube (52).

6. A method as claimed in any preceding claim, in which the method step of providing said hole (40) comprises forming said hole with a constant diameter extending through the first wall (46), the second wall (36) and the filler layer (34).

7. A method as claimed in any one of Claims 1 to 5, in which the method step of providing said hole (40) comprises forming said hole with a first diameter extending through the first wall (46) and forming said hole with a second diameter, different to the first diameter, extending through the second wall (36) and filler layer (34), and wherein the tube has a first portion has an outer diameter substantially equal to the first diameter of said hole and a second portion has an outer diameter substantially equal to the second diameter of said hole such that there is a close fit of the tube within said hole.

8. A method as claimed in Claim 7, in which the first diameter is smaller than the second diameter and the tube (52) has a step (58) in diameter corresponding with difference between the first diameter and the second diameter of the hole, whereby said step in the diameter of the tube bears against a side (50) of the first wall (46) opposite said first side (17) when the tube is inserted into the hole so that as the first end (60) of the tube is deformed radially outwards, the first end of the tube expands beyond the first diameter to bear against the first side (17) of the structure and secure the step (58) in the diameter of the tube (52) against said side (50) of the first wall (46) opposite said first side (17).

9. A method as claimed in any preceding claim, in which the method step of pulling the peg (68) through the tube (52) comprises pulling the peg using a hydraulic tension tool.

10. A method as claimed in any preceding claim, in which the method further comprises cutting longitudinal slits (90) in the first end (60) of the tube (52) to form tab portions (92) between the slits, the tab portions being deformed radially outwards by the head portion (74) of the peg (68) as the peg is pulled through the tube.

11. A method as claimed in any preceding claim, in which the first and second walls (46, 36) are concentric walls of a tubular multi-walled structure, the method comprising providing a plurality of said holes (40) spaced around a circumference of said tubular structure.

12. A method as claimed in Claim 11, in which the multi-walled structure is a substantially vertical structure and the filler layer is a grout layer (34) said grout layer being sandwiched between the first wall (46) and the second wall (36) and extending between an upper edge of said gout layer and a lower edge of said grout layer, the method comprising providing a plurality of holes proximate said upper edge and a plurality of holes proximate said lower edge.

13. A securing pin assembly (38) for stabilising a multi-walled structure having a first wall (46) and a second wall (36) on respective first and second sides (17, 64) of said structure, and a filler layer (34) sandwiched between the first and second walls, the securing pin assembly comprising:
- a tube (52), the tube having a central bore (66) and the tube extending axially between a first end (60) of the tube and a second end (62) of the tube;
- a peg (68), the peg extending axially through the central bore (66) of the tube between a first end (69) of the peg and a second end (75) of the peg and having a head portion (74) at said first end of the peg that bears against an inner diameter of said bore (66) at the first end of the tube, at least a part (78) of the head portion having an outer diameter greater than the diameter of the bore of the tube, such that when the head portion (74) of the peg and the first end (60) of the tube are, in use, pressed axially together, the head portion is configured to cause the first end of the tube to deform radially outwards so that the first end of the tube expands beyond the diameter of the bore (66) of the tube on the first side (17) of the structure;
- a first securing means (80) that is secured to a second end (75) of the peg such that said first securing means bears against the second end (62) of the tube in order to secure said expansion of the first end (60) of the tube;
- a second securing means (84, 86) that is secured to the second end (62) of the tube such that the second securing means, in use, bears against the second side (64) of the structure;
- wherein, the deformed first end (60) of the tube (52) and the second securing means (84, 86) are configured, in use, to apply a compressive force to, respectively, the first side (17) of the structure and the second side (64) of the structure and thereby clamp together the first and second walls (46, 36) of the structure to compress the filler layer (34) between said walls.

14. A multi-walled structure having a first wall (46) and a second wall (36) on respective first and second sides (17, 64) of said structure, a filler layer (34) sandwiched between the first and second walls, and a hole (40) extending through the first wall (46) and the second wall (36) and said filler layer (34) between said walls from the first side of the structure to the second side of the structure, wherein said structure is stabilised by a securing pin assembly, said securing pin assembly being as claimed in Claim 13.

15. A multi-walled structure as claimed in Claim 14, in which the hole (40) has an inner surface with a first diameter where the hole (40) passes through the first wall (46) and a second diameter where the hole (40) passes through the filler (34), the second diameter being greater than the first diameter such that the inner surface of the hole (40) has an annular step, and the tube (52) has an outer surface that has an annular step which conforms to the annular step in the inner surface of the hole (40).

## Patentansprüche

1. Verfahren zur Stabilisierung einer mehrwandigen Struktur, wobei die Struktur eine erste Wand (46) und eine zweite Wand (36) umfasst und eine Füllschicht (34), die zwischen der ersten und der zweiten Wand liegt, wobei die erste Wand eine erste Seite (17) der Struktur bildet und die zweite Wand eine zweite Seite (64) der Struktur bildet, wobei das Verfahren Folgendes umfasst:
- Bereitstellen von wenigstens einem Loch (40), welches sich durch die erste Wand (46) und die zweite Wand (36) und die Füllschicht (34) zwischen den Wänden von der ersten Seite der Struktur zur zweiten Seite der Struktur erstreckt;
- Einschieben einer Röhre (52) durch das Loch (40), wobei die Röhre eine zentrale Bohrung (66) aufweist, wobei ein erstes Ende (60) der Röhre sich von der ersten Seite (17) der Struktur aus erstreckt und ein zweites Ende (62) der Röhre sich von der zweiten Seite (64) der Struktur aus erstreckt;
- Einsetzen eines Stiftes (68) durch die Bohrung (66) der Röhre (52), wobei der Stift einen Kopfteil (74) an einem ersten Ende (69) des Stiftes aufweist, wobei wenigstens ein Teil (78) des Kopfteils einen Außendurchmesser hat, der größer als der Durchmesser der Bohrung der Röhre ist, und wobei der Kopfteil (74) auf der ersten Seite (17) der Struktur angeordnet wird;
- Ziehen des Stiftes (68) durch die Röhre (52) in Richtung der zweiten Seite (64) der Struktur, so dass der Kopfteil (74) bewirkt, dass das erste Ende (60) der Röhre sich radial nach außen verformt, so dass das erste Ende der Röhre sich über den Durchmesser der Bohrung (66) der Röhre hinaus aufweitet, um gegen die erste Seite der Struktur anzuliegen;
- Anbringen eines ersten Sicherungsmittels (80) am zweiten Ende (75) des Stiftes auf der zweiten Seite (64) der Struktur derart, dass das erste Sicherungsmittel sich an das zweite Ende (62) der Röhre anlegt, um die Aufweitung des ersten Endes (60) der Röhre zu sichern; und
- Anbringen eines zweiten Sicherungsmittels (84, 86) an dem zweiten Ende (62) der Röhre derart, dass sich das zweite Sicherungsmittel an die zweite Seite (64) der Struktur anlegt;
wobei das verformte erste Ende (60) der Röhre (52) auf der ersten Seite (17) der Struktur und das zweite Sicherungsmittel (84, 86) auf der zweiten Seite (64) der Struktur die erste und die zweite Seitenwand (46, 36) der Struktur miteinander verklemmen, wodurch sie eine Kompressionskraft auf die Füllschicht (34) zwischen den Wänden ausüben.

2. Verfahren nach Anspruch 1,
bei welchem das Verfahren das Anbringen einer sich verjüngenden Mutter (74) auf dem ersten Ende (60) des Stiftes (68) beinhaltet, um den Kopfteil des Stiftes zu bilden.

3. Verfahren nach Anspruch 2,
bei welchem ein Ende (76) der Mutter (74) einen Außendurchmesser hat, der kleiner ist als der Durchmesser der Bohrung (66) der Röhre, und ein gegenüberliegendes Ende (78) der Mutter einen Durchmesser hat, der größer ist als der Durchmesser der Bohrung der Röhre, und wobei die Mutter derart angeordnet wird, dass, wenn der Stift (68) durch die Röhre (52) gezogen wird, das Ende der Mutter mit dem kleineren Durchmesser zunächst das erste Ende (60) der Röhre berührt.

4. Verfahren nach einem der vorigen Ansprüche,
bei welchem das erste Sicherungsmittel eine Mutter (80) umfasst und das Verfahren den Schritt des Aufschraubens der Mutter auf ein mit Gewinde versehenes zweites Ende (75) des Stiftes (68) umfasst.

5. Verfahren nach einem der vorigen Ansprüche,
bei welchem das zweite Sicherungsmittel eine Mutter (86) umfasst und das Verfahren den Schritt des Aufschraubens der Mutter auf ein mit Gewinde versehenes zweites Ende (75) der Röhre (52) umfasst.

6. Verfahren nach einem der vorigen Ansprüche,
bei welchem der Verfahrensschritt des Bereitstellens des Loches (40) das Ausbilden des Loches mit konstantem Durchmesser umfasst, welches sich durch die erste Wand (46), die zweite Wand (36) und die Füllschicht (34) erstreckt.

7. Verfahren nach einem der Ansprüche 1 bis 5,
bei welchem der Verfahrensschritt des Bereitstellens des Loches (40) das Ausbilden des Loches mit einem ersten Durchmesser mit einer Erstreckung durch die erste Wand (46) und das Ausbilden des Loches mit einem vom ersten Durchmesser verschiedenen zweiten Durchmesser mit Erstreckung durch die zweite Wand (36) und die Füllschicht (34) umfasst, und wobei die Röhre einen ersten Abschnitt mit einem zum ersten Durchmesser des Loches im Wesentlichen gleichen Außendurchmesser und einen zweiten Abschnitt mit einem zum zweiten Durchmesser des Loches im Wesentlichen gleichen Außendurchmesser aufweist, so dass die Röhre in das Loch genau hineinpasst.

8. Verfahren nach Anspruch 7,
bei welchem der erste Durchmesser kleiner als der zweite Durchmesser ist und die Röhre (52) eine Durchmesser-stufe (58) aufweist, die mit der Differenz zwischen dem ersten Durchmesser und dem zweiten Durchmesser des Loches korrespondiert, wodurch die Durchmesserstufe der Röhre gegen eine Seite (50) der ersten Wand (46) gegenüber der ersten Seite (17) anliegt, wenn die Röhre in das Loch eingeschoben wird, so dass während das erste Ende (60) der Röhre radial nach außen verformt wird, das erste Ende der Röhre sich über den ersten Durchmesser hinaus aufweitet, um gegen die erste Seite (17) der Struktur anzuliegen und die Durchmesserstufe (58) der Röhre (52) gegen die Seite (50) der der ersten Seite (17) gegenüberliegenden ersten Wand (46) zu sichern.

9. Verfahren nach einem der vorigen Ansprüche,
bei welchem der Verfahrensschritt des Ziehens des Stiftes (68) durch die Röhre (52) das Ziehen des Stiftes unter Verwendung eines hydraulischen Spannwerkzeuges umfasst.

10. Verfahren nach einem der vorigen Ansprüche,
bei welchem das Verfahren weiter das Schneiden von Längsschlitzen (90) in das erste Ende (60) der Röhre (52) umfasst, um Laschenabschnitte (92) zwischen den Schlitzen zu bilden, wobei die Laschenabschnitte durch den Kopfteil (74) des Stiftes radial nach außen verformt werden, wenn der Stift durch die Röhre gezogen wird.

11. Verfahren nach einem der vorigen Ansprüche,
bei welchem die erste und die zweite Wand (46, 36) konzentrische Wände einer röhrenförmigen Mehrwandstruktur sind, wobei das Verfahren das Bereitstellen einer Mehrzahl von Löchern (40) umfasst, welche um den Umfang der röhrenförmigen Struktur herum beabstandet sind.

12. Verfahren nach Anspruch 11,
bei welchem die Mehrwandstruktur eine im Wesentlichen vertikale Struktur ist und die Füllschicht eine Vergussmaterialschicht (34) ist, wobei die Vergussmaterialschicht zwischen der ersten Wand (46) und der zweiten Wand (36) angeordnet ist und sich zwischen einem oberen Rand der Vergussmaterialschicht und einem unteren Rand der Vergussmaterialschicht erstreckt, wobei das Verfahren das Bereitstellen einer Mehrzahl von Löchern, die benachbart zum oberen Rand liegen, und einer Mehrzahl von Löchern umfasst, die benachbart zum unteren Rand liegen.

13. Befestigungsanordnung (38) zur Stabilisierung einer Mehrwandstruktur mit einer ersten Wand (46) und einer zweiten Wand (36) auf einer ersten bzw. zweiten Seite (17, 64) der Struktur und einer Füllschicht (34), die zwischen der ersten und zweiten Wand angeordnet ist, wobei die Befestigungsanordnung Folgendes umfasst:
- eine Röhre (52), wobei die Röhre eine zentrale Bohrung (66) aufweist und die Röhre sich in axialer Richtung zwischen einem ersten Ende (60) der Röhre und einem zweiten Ende (62) der Röhre erstreckt;
- einen Stift (68), welcher sich in axialer Richtung durch die zentrale Bohrung (66) der Röhre zwischen einem ersten Ende (69) des Stiftes und einem zweiten Ende (75) des Stiftes erstreckt und der ein an einem inneren Durchmesser der Bohrung (66) anliegendes Kopfteil (74) an dem ersten Ende des Stiftes aufweist, wobei wenigstens ein Abschnitt (78) des Kopfteils einen Außendurchmesser aufweist, der größer ist als der Durchmesser der Bohrung der Röhre, so dass wenn der Kopfteil (74) des Stiftes und das erste Ende (60) der Röhre im Gebrauchszustand in axialer Richtung zusammengedrückt werden, der Kopfteil so konfiguriert ist, dass er bewirkt, dass das erste Ende der Röhre sich radial nach außen verformt, so dass das erste Ende der Röhre sich auf der ersten Seite (17) der Struktur über den Durchmesser der Bohrung (66) der Röhre hinaus aufweitet;
- ein erstes Sicherungsmittel (80), welches am zweiten Ende (75) des Stiftes derart angebracht ist, dass das erste Sicherungsmittel gegen das zweite Ende (62) der Röhre anliegt, um die Aufweitung des ersten Endes (60) der Röhre zu sichern;
- ein zweites Sicherungsmittel (84, 86), welches an dem zweiten Ende (62) der Röhre derart angebracht ist, dass das zweite Sicherungsmittel im Gebrauchszustand gegen die zweite Seite (64) der Struktur anliegt;
- wobei das deformierte erste Ende (60) der Röhre (52) und das zweite Sicherungsmittel (84, 86) so konfiguriert sind, dass sie im Gebrauchszustand eine Kompressionskraft auf die erste Seite (17) der Struktur beziehungsweise die zweite Seite (64) der Struktur ausüben und dadurch die erste und zweite Seitenwand (46, 36) der Struktur zusammenklemmen, um die Füllschicht (34) zwischen den Wänden zu komprimieren.

14. Mehrwandstruktur mit einer ersten Seitenwand (46) und einer zweiten Seitenwand (36) auf einer ersten bzw. zweiten Seite (17, 64) der Struktur, mit einer zwischen der ersten und der zweiten Seitenwand angeordneten Füllschicht (34) und einem Loch (40), welches sich durch die erste Wand (46) und die zweite Wand (36) und die Füllschicht (34) zwischen den Wänden von der ersten Seite der Struktur zur zweiten Seite der Struktur erstreckt, wobei die Struktur durch eine Befestigungsanordnung stabilisiert ist, wobei die Befestigungsanordnung nach Anspruch 13 ausgeführt ist.

15. Mehrwandstruktur nach Anspruch 14,
bei welcher das Loch (40) eine Innenfläche mit einem ersten Durchmesser dort, wo das Loch (40) durch die erste Wand (46) hindurchtritt, und einem zweiten Durchmesser dort, wo das Loch (40) durch die Füllschicht (34) hindurchtritt, aufweist, wobei der zweite Durchmesser größer als der erste Durchmesser ist, so dass die Innenfläche des Loches (40) eine ringförmige Stufe aufweist, und wobei die Röhre (52) eine Außenfläche aufweist, welche eine ringförmige Stufe hat, die zu der ringförmigen Stufe in der Innenfläche des Loches passt.

## Revendications

1. Procédé de stabilisation d'une structure à parois multiples, la structure comprenant une première paroi (46) et une seconde paroi (36), et une couche de matériau de remplissage (37) prise en sandwich entre les première et seconde parois, la première paroi fournissant un premier côté (17) de la structure et la seconde paroi fournissant un second côté (64) de la structure, le procédé comprenant :
- la fourniture d'au moins un trou (40) s'étendant à travers la première paroi (46) et la seconde paroi (36) et ladite couche de matériau de remplissage (34) entre lesdites parois du premier côté de la structure au second côté de la structure ;
- l'insertion d'un tube (52) par ledit trou (40), le tube présentant un alésage central (66), une première extrémité (60) du tube s'étendant depuis le premier côté (17) de la structure et une seconde extrémité (62) du tube s'étendant depuis le second côté (64) de la structure ;
- l'insertion d'une cheville (68) par l'alésage (66) du tube (52), la cheville présentant une partie de tête (74) à une première extrémité (69) de la cheville, au moins une partie (78) de la partie de tête possédant un diamètre extérieur supérieur au diamètre de l'alésage du tube, et la partie de tête (74) étant située sur le premier côté (17) de la structure ;
- la traction de la cheville (68) à travers le tube (52) vers le second côté (64) de la structure de sorte que la partie de tête (74) entraîne une déformation radiale vers l'extérieur de la première extrémité (60) du tube afin que la première extrémité du tube s'étende au-delà du diamètre de l'alésage (66) du tube pour s'appuyer contre le premier côté de la structure ;
- la fixation d'un premier moyen de fixation (80) à une seconde extrémité (75) de la cheville sur le second côté (64) de la structure de sorte que ledit premier moyen de fixation s'appuie contre la seconde extrémité (62) du tube dans le but de fixer ladite extension de la première extrémité (60) du tube ; et
- la fixation d'un second moyen de fixation (84, 86) à la seconde extrémité (62) du tube de sorte que le second moyen de fixation s'appuie contre le second côté (64) de la structure ;
dans lequel la première extrémité déformée (60) du tube (52) sur le premier côté (17) de la structure et le second moyen de fixation (84, 86) sur le second côté (64) de la structure serrent ensemble les première et seconde parois (46, 36) de la structure, appliquant ainsi une force de compression à la couche de matériau de remplissage (34) entre lesdites parois.

2. Procédé selon la revendication 1, dans lequel le procédé comprend la fixation d'un écrou (74) conique sur la première extrémité (60) de la cheville (68) pour former la partie de tête de la cheville.

3. Procédé selon la revendication 2, dans lequel une extrémité (76) de l'écrou (74) présente un diamètre extérieur inférieur au diamètre de l'alésage (66) du tube et une extrémité opposée (78) de l'écrou présente un diamètre supérieur au diamètre de l'alésage du tube, et dans lequel l'écrou est agencé de sorte que lorsque la cheville (68) est tirée à travers le tube (52), l'extrémité de l'écrou possédant le plus petit diamètre touche en premier la première extrémité (60) du tube.

4. Procédé selon l'une quelconque des revendications précédentes, dans lequel le premier moyen de fixation comprend un écrou (80) et le procédé comprend l'étape de visser ledit écrou sur une seconde extrémité filetée (75) de la cheville (68).

5. Procédé selon l'une quelconque des revendications précédentes, dans lequel le second moyen de fixation comprend un écrou (86) et le procédé comprend l'étape de visser ledit écrou sur une seconde extrémité filetée (75) du tube (52).

6. Procédé selon l'une quelconque des revendications précédentes, dans lequel l'étape de procédé de fourniture dudit trou (40) comprend la formation dudit trou avec un diamètre constant s'étendant à travers la première paroi (46), la seconde paroi (36) et la couche de matériau de remplissage (34).

7. Procédé selon l'une quelconque des revendications 1 à 5, dans lequel l'étape de procédé de fourniture dudit trou (40) comprend la formation dudit trou avec un premier diamètre s'étendant à travers la première paroi (46) et la formation dudit trou avec un second diamètre différent du premier diamètre, s'étendant à travers la seconde paroi (36) et la couche matériau de remplissage (34), et dans lequel le tube présente une première partie dont un diamètre extérieur est sensiblement égal au premier diamètre dudit trou et une seconde partie dont un diamètre extérieur est sensiblement égal au second diamètre dudit trou de sorte que le tube soit ajusté de manière juste dans ledit trou.

8. Procédé selon la revendication 7, dans lequel le premier diamètre est inférieur au second diamètre et le tube (52) présente une marche (58) dont le diamètre correspond à la différence entre le premier diamètre et le second diamètre du trou, moyennant quoi ladite marche dans le diamètre du tube s'appuie contre un côté (50) de la première paroi (46) opposée audit premier côté (17) lorsque le tube est inséré dans le trou de sorte que lorsque la première extrémité (60) du tube est déformée radialement vers l'extérieur, la première extrémité du tube s'étende au-delà du premier diamètre pour venir s'appuyer contre le premier côté (17) de la structure et fixer la marche (58) dans le diamètre du tube (52) contre ledit côté (50) de la première paroi (46) opposé audit premier côté (17).

9. Procédé selon l'une quelconque des revendications précédentes, dans lequel l'étape de procédé de traction de la cheville (68) à travers le tube (52) comprend la traction de la cheville en utilisant un outil de tension hydraulique.

10. Procédé selon l'une quelconque des revendications précédentes, dans lequel le procédé comprend en outre la coupe de fentes longitudinales (90) dans la première extrémité (60) du tube (52) pour former des parties de pattes (92) entre les fentes, les parties de pattes étant déformées radialement vers l'extérieur par la partie de tête (74) de la cheville (68) lorsque la cheville est tirée à travers le tube.

11. Procédé selon l'une quelconque des revendications précédentes, dans lequel les première et seconde parois (46, 36) sont des parois concentriques d'une structure tubulaire à parois multiples, le procédé comprenant la fourniture d'une pluralité desdits trous (40) espacés autour d'une circonférence de ladite structure tubulaire.

12. Procédé selon la revendication 11, dans lequel la structure à parois multiples est une structure sensiblement verticale et la couche de matériau de remplissage est une couche de scellement (34), ladite couche de scellement étant prise en sandwich entre la première paroi (46) et la seconde paroi (36) et s'étendant entre une arête supérieure de ladite couche de scellement et une arête inférieure de ladite couche de scellement, le procédé comprenant la fourniture d'une pluralité de trous à proximité de ladite arête supérieure et une pluralité de trous à proximité de ladite arête inférieure.

13. Ensemble de broche de fixation (38) pour la stabilisation d'une structure à parois multiples présentant une première paroi (46) et une seconde paroi (36) sur des premier et second côtés respectifs (17, 64) de ladite structure, et une couche de matériau de remplissage (34) prise en sandwich entre les première et seconde parois, l'ensemble de broche de fixation comprenant :
- un tube (52), le tube présentant un alésage central (66) et le tube s'étendant axialement entre une première extrémité (60) du tube et une seconde extrémité (62) du tube ;
- une cheville (68), la cheville s'étendant axialement à travers l'alésage central (66) du tube entre une première extrémité (69) de la cheville et une seconde extrémité (75) de la cheville et présentant une partie de tête (74) à ladite première extrémité de la cheville qui s'appuie contre un diamètre intérieur dudit alésage (66) à la première extrémité du tube, au moins une partie (78) de la partie de tête possédant un diamètre extérieur supérieur au diamètre de l'alésage du tube de sorte que lorsque la partie de tête (74) de la cheville et la première extrémité (60) du tube sont pressées, en utilisation, axialement ensemble, la partie de tête soit configurée pour entraîner une déformation radiale vers l'extérieur de la première extrémité du tube de sorte que la première extrémité du tube s'étende au-delà du diamètre de l'alésage (66) du tube sur le premier côté (17) de la structure ;
- un premier moyen de fixation (80) qui est fixé sur une seconde extrémité (75) de la cheville de sorte que ledit premier moyen de fixation s'appuie contre la seconde extrémité (62) du tube afin de fixer ladite extension de la première extrémité (60) du tube ;
- un second moyen de fixation (84, 86) qui est fixé sur la seconde extrémité (62) du tube de sorte que le second moyen de fixation s' appuie, en utilisation, contre le second côté (64) de la structure ;
- dans lequel la première extrémité déformée (60) du tube (52) et le second moyen de fixation (84, 86) sont configurés pour appliquer, en utilisation, une force de compression, respectivement, au premier côté (17) de la structure et au second côté (64) de la structure et serrer ainsi ensemble les première et seconde parois (46, 36) de la structure pour compresser la couche de matériau de remplissage (34) entre lesdites parois.

14. Structure à parois multiples présentant une première paroi (46) et une seconde paroi (36) sur des premier et second côtés respectifs (17, 64) de ladite structure, une couche de matériau de remplissage (34) prise en sandwich entre les première et seconde parois, et un trou (40) s'étendant à travers la première paroi (46) et la seconde paroi (36) et ladite couche de matériau de remplissage (34) entre lesdites parois du premier côté de la structure au second côté de la structure, dans laquelle ladite structure est stabilisée par un assemblage de broche de fixation, ledit assemblage de broche de fixation étant selon la revendication 13.

15. Structure à parois multiples selon la revendication 14, dans laquelle le trou (40) présente une surface intérieure avec un premier diamètre là où le trou (40) passe à travers la première paroi (46) et un second diamètre là où le trou (40) passe à travers le matériau de remplissage (34), le second diamètre étant supérieur au premier diamètre de sorte que la surface intérieure du trou (40) présente une marche annulaire, et le tube (52) présente une surface extérieure qui présente une marche annulaire correspondant à la marche annulaire dans la surface intérieure du trou (40).
